# EUROPEAN PATENT APPLICATION

(11) **EP 2 418 062 A2**
(43) Date of publication of application: **15.02.2012**
(21) Application number: 11176989.9
(22) Date of filing: 09.08.2011
(51) Int. Cl.: B29C 44/58, B29C 33/14, B29C 33/44

(54) **Cavity and core changing type foam-forming mold**

(30) Priority: 12.08.2010 KR 20100077773
(71) Applicant: Dongshin Industry Inc., Maegok-dong, Buk-gu Ulsan 683-420 (KR)
(72) Inventor: Kim, Gyong Ho, 689-705 Ulsan (KR)
(74) Representative: Dr. Weitzel & Partner

(57) **Abstract**

A cavity and core changing type foam-forming mold is provided, which has a fixed mold (200) and a movable mold (100) that is horizontally transported in the direction of the fixed mold (200) and is assembled with the fixed mold (200) to be attached to and detached from a molding machine. The cavity and core changing type foam-forming mold includes one or more cavities detachably coupled to one side surface of the movable mold that faces the fixed mold, one or more cores (202) detachably coupled to one side surface of the fixed mold that faces the movable mold (100), a raw material injector (140) installed on the movable mold (100) to supply a raw material of a molded product into a molding space that is formed between the cavity and the core when the movable mold (100) and the fixed mold (200) are combined, and an ejection means (150) installed on the movable mold to separate the molded product molded in the molding space from the cavity.

## Description

### BACKGROUND OF THE INVENTION

### Field of the invention

The present invention relates to a cavity and core changing type foam-forming mold, and more particularly to a cavity and core changing type foam-forming mold, which can change a cavity and a core according to the specification of a product to be molded.

### Description of the Prior Art

In general, an expanded poly-propylene (EPP) or expanded polystyrene (EPS) product forming mold forms an EPP or EPS product of a predetermined shape by fusing EPP or EPS grains filled in a molding space of the EPP or EPS product forming mold using high-pressure steam.

Since the EPP or EPS product is more environment-friendly than a material such as urethane, it has been widely used for a handle, particularly, a rim, mounted in a vehicle, a sun visor for a vehicle, and the like.

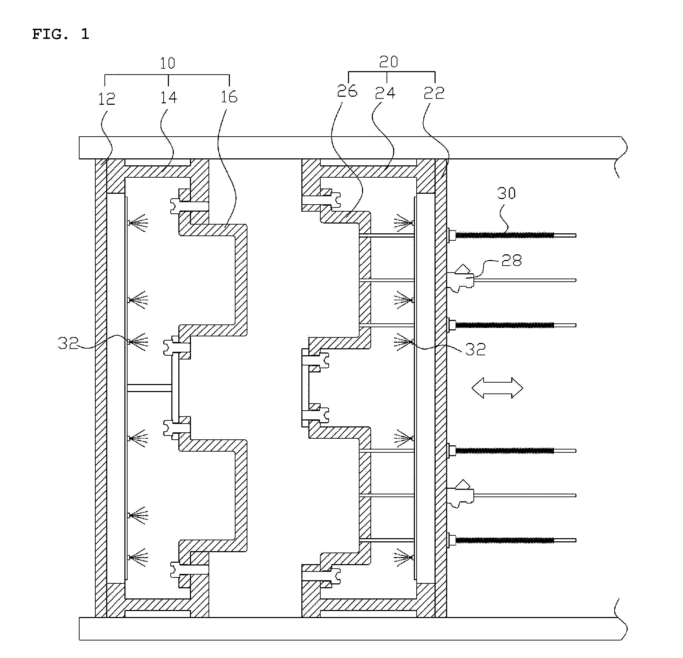

Referring to FIG. 1, an EPP or EPS product forming mold in the related art includes a fixed mold 10 and a movable mold 20.

The fixed mold 10 is composed of a fixed base plate 12, a fixed frame 14 coupled to one side surface of the fixed base plate 12, and a core 16 coupled to one side of the fixed frame 14.

The movable mold 20 is provided in symmetry with the fixed mold 10 so that the movable mold 20 moves toward the fixed mold 10 and is assembled with the fixed mold 10. The movable mold 20 includes a movable base plate 22, a movable frame 24 coupled to one side surface of the movable base plate 22, and a cavity 26 coupled to one side of the movable frame 24.

Here, a raw material injector 28 for supplying raw materials into a molding space that is formed between the cavity 26 and the core 16 is installed in a predetermined position of the one side surface of the movable base plate 22, and at least one ejecting tool 30 is installed to be apart for a predetermined distance from the raw material injector 28 to take away a molded product that is molded in the molding space from the cavity 26.

In addition, a plurality of cooling water supply nozzles 32, which are connected to a cooling water supply tube (not illustrated), are provided in predetermined positions of the inner surfaces of the fixed base plate 12 and the movable base plate 22.

However, as described above, the EPP or EPS product forming mold in the related art is constructed in a manner that the cavity 26 and the core 16, which actually form the product, are integrally provided on the movable frame 20 and the fixed frame 10, or bolted to the insides of the movable frame 20 and the fixed frame 10, respectively, and thus if a product to be molded is changed, it is usual to replace the movable mold 20 and the fixed mold 10, which are heavy and voluminous. In the case of replacing only the cavity 26 and the core 16 to simplify the replacement, it is required to separate the fixed base plate 12 and the movable base plate 22 from each other and then to separate the cavity 26 and the core 16, which are bolted to the insides of the fixed frame 14 and the movable frame 24, from each other. Accordingly, the mold replacement time is increased, and thus the workability and productivity are lowered.

Further, since the fixed mold 10 and the movable mold 20 are separately manufactured according to the specification of the product, the mold manufacturing cost is increased, and a large number of fixed molds 10 and movable molds 20, which are heavy and voluminous, should be kept and managed to lower the utility of a factory site.

### SUMMARY OF THE INVENTION

Accordingly, the present invention has been made to solve the above-mentioned problems occurring in the prior art while advantages achieved by the prior art are maintained intact.

One subject to be achieved by the invention is to provide a cavity and core changing type foam-forming mold, which enables only a cavity and a core to be changed according to the specification of a product to be molded to prevent the lowering of the workability and productivity according to the mold replacement, reduces the mold manufacturing cost since it is not required to manufacture the mold by specifications, and improves the utility of the factory site according to the custody of the molds.

In one aspect of the present invention, there is provided a cavity and core changing type foam-forming mold having a fixed mold and a movable mold that is horizontally transported in the direction of the fixed mold and is assembled with the fixed mold to be attached to and to be detached from a molding machine, which includes one or more cavities detachably coupled to one side surface of the movable mold that faces the fixed mold; one or more cores detachably coupled to one side surface of the fixed mold that faces the movable mold; a raw material injector installed on the movable mold to supply a raw material of a molded product into a molding space that is formed between the cavity and the core when the movable mold and the fixed mold are combined; and an ejection means installed on the movable mold to separate the molded product molded in the molding space from the cavity.

The movable mold may include a movable plate having at least one cavity fastening hole formed thereon to make the cavity detachable, a support plate provided to be spaced apart for a predetermined distance from the movable plate, and a plurality of support bars supporting the movable plate and the support plate to be spaced apart from each other, wherein a stepped portion is formed on one side surface of a border of the cavity fastening hole along the circumferential direction so that the cavity is coupled to one side surface of the movable mold that faces the fixed mold, and the fixed mold has a fixed plate having at least one core fastening hole formed thereon to make the core detachable, and a stepped portion is formed on one side surface of a border of the core fastening hole along the circumferential direction so that the core is coupled to one side surface of the fixed mold that faces the movable mold.

The cavity and core changing type foam-forming mold according to an embodiment of the present invention may further include one or more fastening portions formed in a predetermined position on an opposite surface of the molding space of the cavity, and a support having one end that is coupled to the one or more fastening portions and the other end that is in contact with a predetermined position on an inner side surface of the support plate.

The cavity and core changing type foam-forming mold according to an embodiment of the present invention may further include one or more fastening portions formed in a predetermined position on an opposite surface of the molding space of the core, and a support having one end that is coupled to the one or more fastening portions and the other end that is in contact with a predetermined position on an inner wall on a fixing side of the molding machine.

A plurality of supports may be provided, and the neighboring supports are connected by a support connection bar to be spaced apart from each other.

At least one support portion may be formed to project from a predetermined position on one side surface of the support plate and the predetermined position on the inner wall on the fixing side of the molding machine to support the other end portion of the support.

The raw material injector may include a body having a raw material inlet port and an air inlet port, a connection pipe in which two large and small pipes are screw-engaged with a front end portion of the body to form an air transport space portion, a nozzle coupled to a front end portion of the connection pipe, a piston rod penetratingly coupled to a rear end portion of the body to perform a reciprocating motion within the body, and a piston coupled to a front end portion of the piston rod to open/close the nozzle according to a movement direction of the piston rod.

The ejection means may include an ejector pin elastically and movably inserted into the inside of the piston rod, a support member penetratingly coupled to a circumferential surface of the ejector pin and placed on an end portion of the piston rod, a fixing member coupled to a locking groove that is formed on one end portion of the ejector pin, and a coil spring inserted into the circumferential surface of the ejector pin and having one end portion and the other end portion elastically supported in the support member and the fixing member, respectively.

According to the present invention having the above-described construction, since only the cavity and the core, in which the shape of the molded product to be molded is formed, can be replaced from the movable mold and the fixed mold, mold replacement according to the change of the specification of the molded product is not required, and thus the workability and productivity are improved.

Further, the cavity and the core, which are formed with similar sizes and shapes, can be used together in a set of molds, and thus it is not required to manufacture molds by specifications of a molded product to be molded. Accordingly, the mold investment cost can be saved, and the number of molds to be manufactured can be reduced to improve the utility of the factory site.

### BRIEF DESCRIPTION OF THE DRAWINGS

The above and other objects, features and advantages of the present invention will be more apparent from the following detailed description taken in conjunction with the accompanying drawings, in which:
FIG. 1 is a cross-sectional view schematically illustrating a mold in the related art;
FIG. 2 is a perspective view of a movable mold according to a preferred embodiment of the present invention;
FIG. 3 is a perspective view of a fixed mold according to a preferred embodiment of the present invention;
FIG. 4 is an exploded perspective view of a movable mold illustrated in FIG. 2;
FIG. 5 is an exploded perspective view of a fixed mold illustrated in FIG. 3;
FIG. 6 is a cross-sectional view taken along line I-I illustrated in FIG. 2;
FIG. 7 is a cross-sectional view taken along line II-II illustrated in FIG. 3;
FIG. 8 is a cross-sectional view of a raw material injector illustrated in FIG. 4; and
FIG. 9 is a cross-sectional view schematically illustrating a cavity and core changing type foam-forming mold according to a preferred embodiment of the present invention.

### DETAILED DESCRIPTION OF THE PREFERRED EMBODIMENTS

Hereinafter, a cavity and core changing type foam-forming mold according to a preferred embodiment of the present invention will be described with reference to the accompanying drawings.

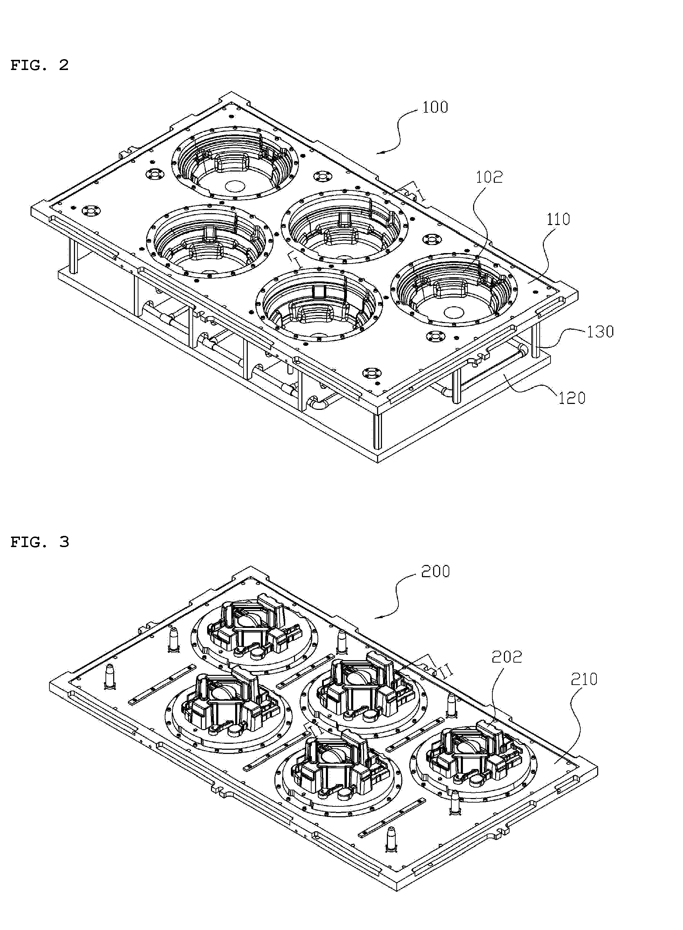

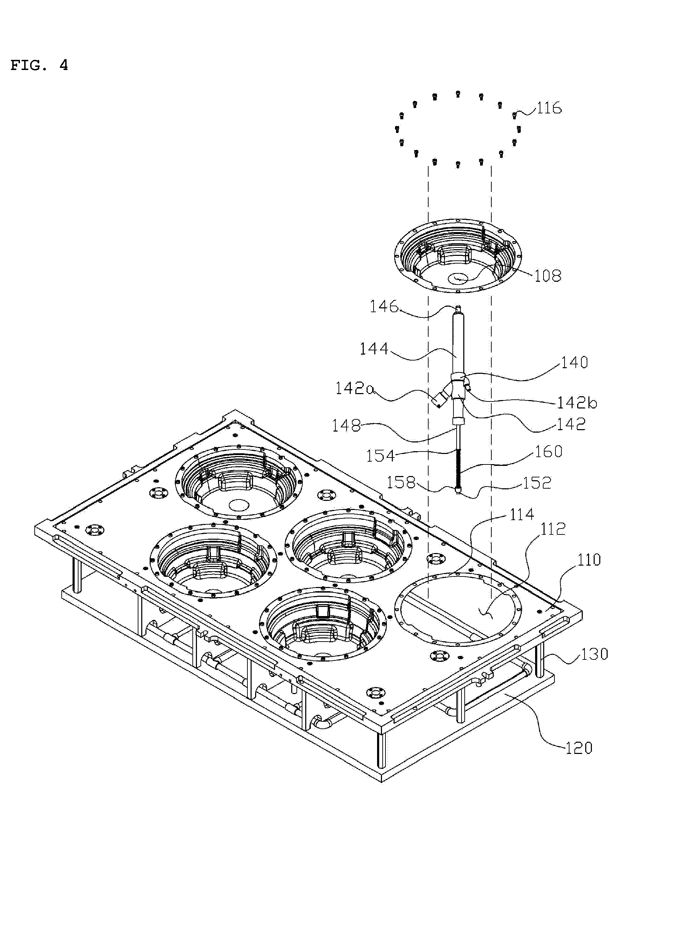

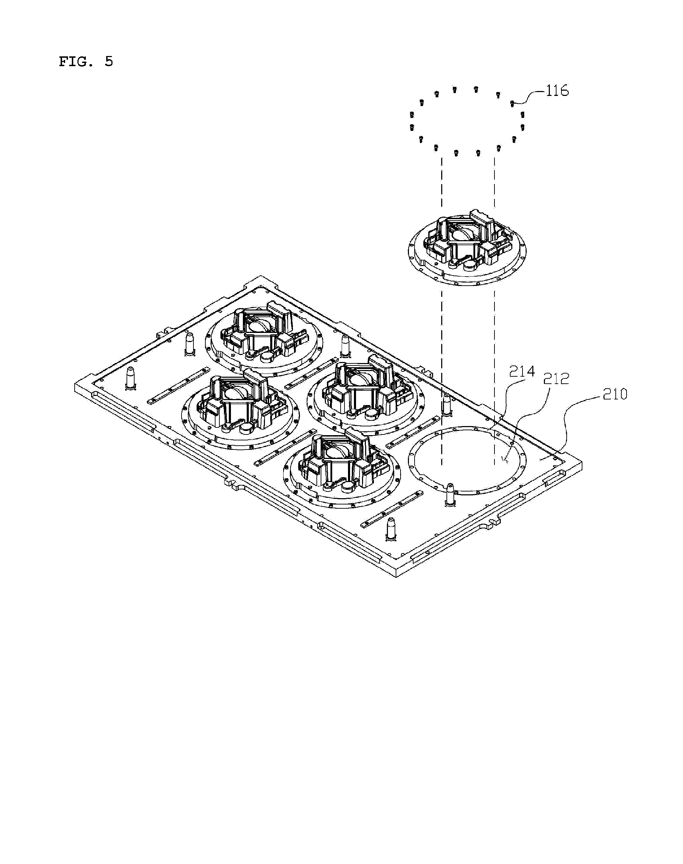

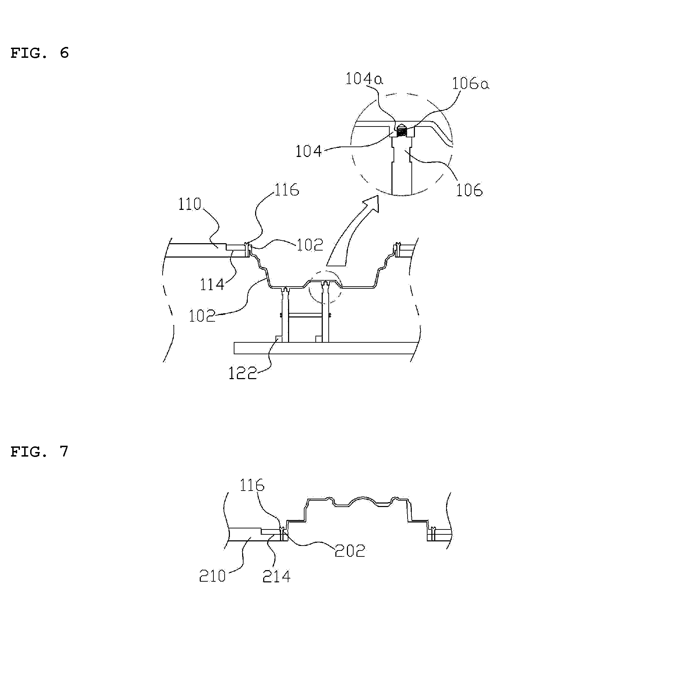

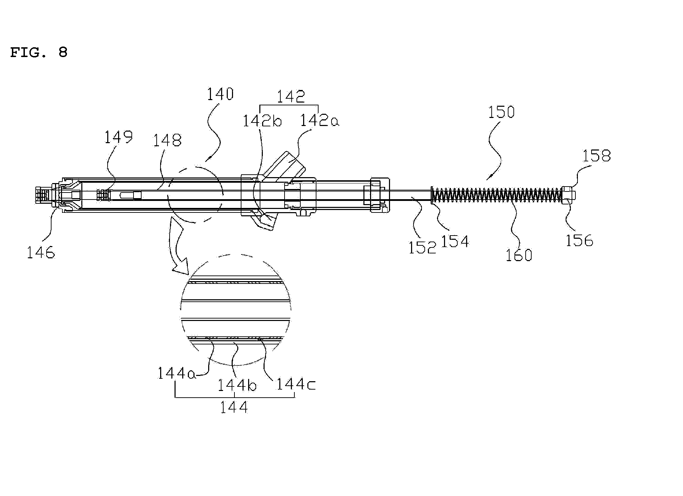

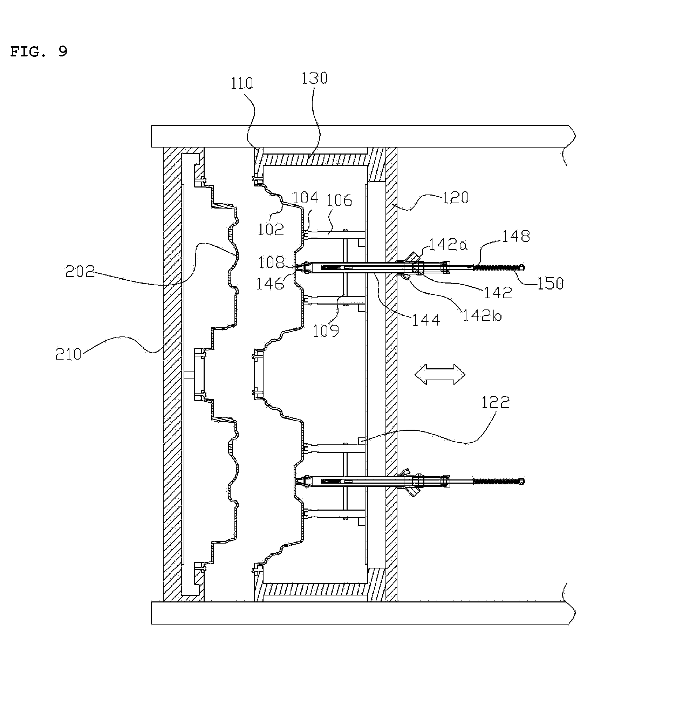

FIG. 2 is a perspective view of a movable mold according to a preferred embodiment of the present invention, and FIG. 3 is a perspective view of a fixed mold according to a preferred embodiment of the present invention. FIG. 4 is an exploded perspective view of a movable mold illustrated in FIG. 2, and FIG. 5 is an exploded perspective view of a fixed mold illustrated in FIG. 3. FIG. 6 is a cross-sectional view taken along line I-I illustrated in FIG. 2, FIG. 7 is a cross-sectional view taken along line II-II illustrated in FIG. 3, and FIG. 8 is a cross-sectional view of a raw material injector illustrated in FIG. 4. FIG. 9 is a cross-sectional view schematically illustrating a cavity and core changing type foam-forming mold according to a preferred embodiment of the present invention.

Referring to FIGS. 2 t 9, a cavity and core changing type foam-forming mold according to an embodiment of the present invention includes a fixed mold 200 coupled to an inner wall on the fixing side of a molding machine, a movable mold 100 that is coupled to an inner wall on a moving side of the molding machine, and is horizontally transported in the direction of the fixed mold 200 to be assembled with the fixed mold 200, one or more cavities 102 detachably coupled to one side surface of the movable mold 100 that faces the fixed mold 200; one or more cores 202 detachably coupled to one side surface of the fixed mold 200 that faces the movable mold 100; a raw material injector 140 supplying a raw material of a molded product into a molding space that is formed between the cavity 102 and the core 202 when the movable mold 100 and the fixed mold 200 are combined; and an ejection means 150 separating the molded product molded in the molding space from the cavity 102.

The movable mold 100 is movably mounted on the moving side of the molding machine (not illustrated) to reciprocate in the horizontal direction by power being supplied from an outside. As illustrated in FIGS. 2 and 4, the movable mold 100 includes a movable plate 110, a support plate 120 provided to be spaced apart for a predetermined distance from the movable plate 110, and a plurality of support bars 130 supporting the movable plate 110 and the support plate 120 to be spaced apart from each other.

The movable plate 100 is in a rectangular plate shape, and has at least one cavity fastening hole 112. A cavity 102 to be described later is detachably coupled to the cavity fastening hole 112.

The cavity 102 is formed to have a shape of a product to be molded, and forms a molding space through coupling to the core 202 that is detachably coupled to the fixed mold 200 when the movable mold 100 is transported in the horizontal direction and is combined with the fixed mold 200 to be described later.

Here, a stepped portion 114 is formed on one side surface of a border of the cavity fastening hole 112 along the circumferential direction so that the cavity 102 is detachably coupled to one side surface of the movable mold 100 that faces the fixed mold 200 by a bolt 116.

Further, referring to FIG. 6, in a predetermined position on one side surface of the cavity 102, that is, on an opposite surface of the molding space that is formed through coupling of the cavity 102 to the core 202 to be described later, one or more fastening portions 104 are formed to project, and a female screw portion 104a with a predetermined depth is formed in the center of the inside of the fastening portion 104 so that a male screw portion 106a that is formed on one end portion of the support 106 to be described later is screw-engaged with the female screw portion 104a.

Further, in the predetermined position on one side surface of the cavity 102, a raw material supply hole 108 is formed so that a raw material can be easily supplied from a raw material injector 140 to the molding space that is formed through coupling of the cavity 102 to the core 202 to be described later.

The support 106 is in a cylinder shape, and the male screw portion 106a is formed to project from one end portion of the support 106 so that the male screw portion 106a is screw-engaged with the female screw 104a.

The male screw portion 106a formed on one end portion of the support 106 is screw-engaged with the fastening portion 104 formed on a predetermined position on one side surface of the cavity 102, and the other end portion of the support 106 is in contact with a predetermined position on one side surface of the support plate 120 to support the cavity 102 so that the cavity 102 is prevented from being damaged by the pressure.

As described above, according to an embodiment of the present invention, the fastening portion 104 and the support 106 are screw-engaged with each other. However, it is also possible that a locking groove (not illustrated) is formed in the center of the inside of the fastening portion 104, and a locking bar (not illustrated) is formed to project from one end portion of the support 106, so that the fastening portion 104 and the support 106 are shrink-fitted to each other.

Further, referring to FIG. 6, one or plural supports 106 may be provided, and the neighboring supports 106 are connected together by a support connection bar 109 so that the neighboring supports 106 are spaced apart from each other.

The support plate 120 is in a rectangular plate shape, and is provided to be apart for a predetermined distance from the movable plate 110.

Here, between the movable plate 110 and the support plate 120, a plurality of support bars 130 are provided to make the movable plate 110 and the support plate 120 spaced apart from each other.

Further, on a predetermined position on one side surface of the support plate 120, at least one support 122 is formed to project. That is, referring to FIGS. 6 and 9, the support 122 is formed to project from the predetermined position on the one side surface of the support plate 120 that is in contact with the other end portion of the support 106, and if the other end portion of the support 106 becomes in contact with the predetermined position on the one side surface of the support plate 120, the lower end portion of the support 106 is supported by the support portion 122 to prevent the support 106 from drooping due to its weight.

The raw material injector 140 includes a body 142 having a raw material inlet port 142a and an air inlet port 142b, a connection pipe 144 in which two large and small pipes 144a and 144b are screw-engaged with a front end portion of the body 142 to form an air transport space portion 144c, a nozzle 146 coupled to a front end portion of the connection pipe 144, a piston rod 148 penetratingly coupled to a rear end portion of the body 142 to perform a reciprocating motion within the body 142, and a piston 149 coupled to a front end portion of the piston rod 148 to open/close the nozzle 146 according to a movement direction of the piston rod 148.

The raw material injector 140 as constructed above is penetratingly coupled to the predetermined position on one side surface of the support plate 120 of the movable mold 100, and the nozzle 146 of the raw material injector 140 is inserted into and coupled to the raw material supply hole 108 that is formed in the predetermined position on the one side surface of the cavity 102 to supply a raw material to the molding space that is formed through combination of the cavity 102 and the core 202.

The ejection means 150 includes an ejector pin 152 elastically and movably inserted into the inside of the piston rod 148, a support member 154 penetratingly coupled to a circumferential surface of the ejector pin 152 and placed on an end portion of the piston rod 148, a fixing member 158 coupled to a locking groove 156 that is formed with a predetermined depth in a predetermined position of one end portion of the ejector pin 152 along the circumferential direction, and a coil spring 160 inserted into the circumferential surface of the ejector pin 152 and having one end portion and the other end portion elastically supported in the support member 154 and the fixing member 158, respectively.

That is, after the raw material from the raw material injector 140 is injected into the molding space that is formed between the cavity 102 and the core 202 when the movable mold 100 and the fixed mold 200 are combined together and a molded product is molded, the ejector means 150 operates the movable mold 100 to separate the movable mold 100 from the fixed mold 200, and the end portion of the ejector pin 152 becomes in contact with the one side surface of the inside of the molding machine when the movable mold 100 moves toward the one side surface of the inside of the molding machine. At the same time, the ejector pin 152 elastically moves inside the raw material injector 140, and the other end portion of the ejector pin 152 penetratingly projects through the nozzle 146 to push the molded product in the inside of the cavity 102, so that the molded product is separated from the cavity 102.

On the other hand, the fixed mold 200 is fixedly mounted onto the fixing side of the molding machine (not illustrated), and is combined with the movable mold 100 to correspond to the movable mold 100.

Referring to FIG. 5, the fixed mold 200 is provided with a fixed plate 210 in a rectangular plate shape, at lest one core fastening hole 212 is provided on the fixed plate 210, and the core 202 is detachably coupled to the core fastening hole 212.

The core 202 is inserted into the inside of the cavity 102 to mold the product to be molded, and has a shape that corresponds to the cavity 102.

Here, on one side surface of a border of the core fastening hole 212, a stepped portion 214 is formed along the circumferential direction so that the core 202 is detachably coupled to one side surface of the fixed mold 200 that faces the movable mold 100 through a bolt 116.

In general, the core 202 that is provided on the fixed mold 200 has a complicated shape, which may be slightly deformed by gas pressure, and thus the support 106 provided on the cavity 102 is unnecessary. However, if the shape of the core is exceptionally large, one or more fastening portions are formed in the predetermined position on the one side surface of the core 202, that is, although not illustrated in the drawing, on an opposite surface of the molding space that is formed through combination of the core 202 and the cavity 102, and the support is coupled to the fastening portion.

Here, as described above, one end portion of the support is coupled to the fastening portion, and the other end portion thereof becomes in contact with the predetermined position of the inner wall on the fixing side of the molding machine to prevent the core 202 from being damaged by the pressure during molding.

Further, at least one support portion (not illustrated) is formed to project from the predetermined position of the inner wall on the fixing side of the molding machine, and if the other end portion of the support becomes in contact with the predetermined position of the inner wall on the fixing side of the molding machine, the lower end portion of the support is supported by the support portion to prevent the support from drooping due to its weight.

Hereinafter, features of the cavity and core changing type foam-forming mold as constructed above according to an embodiment of the present invention will be described.

First, in the case of molding a product with a changed specification of the product, the molding machine is first stopped, and the cavity 102 and the core 202, which are coupled by a plurality of bolts 116 to the cavity fastening hole 112 of the movable mold 100 and the core fastening hole 212 of the fixed mold 200, respectively, are separated from each other.

Then, the cavity 102 and the core 202, on which the shape of the product is formed, are placed in the cavity fastening hole 112 and the core fastening hole 212, respectively, and then fastened by the bolts 116 to complete the coupling.

Accordingly, it is not required to replace the movable mold 100 and the fixed mold 200, in which the cavity 102 and the core 202 are integrally formed according to the change of the specification of the product to be molded, and thus the lowering of the productivity due to the inconvenience, personnel expenses, and the increase of the replacement time, which occur in replacing the whole molds, can be solved.

Further, since the movable mold 100 and the fixed mold 200 are manufactured by specifications of the product to be molded, the mold investment cost can be reduced, and the utility of a factory site, which is required to manufacture and keep the molds by specifications of the products, can be improved.

Although preferred embodiments of the present invention have been described for illustrative purposes, those skilled in the art will appreciate that various modifications, additions and substitutions are possible, without departing from the scope and spirit of the invention as disclosed in the accompanying claims.

## Claims

1. A cavity and core changing type foam-forming mold having a fixed mold and a movable mold that is horizontally transported in the direction of the fixed mold and is assembled with the fixed mold to be attached to and detached from a molding machine, the cavity and core changing type foam-forming mold comprising:
one or more cavities detachably coupled to one side surface of the movable mold that faces the fixed mold;
one or more cores detachably coupled to one side surface of the fixed mold that faces the movable mold;
a raw material injector installed on the movable mold to supply a raw material of a molded product into a molding space that is formed between the cavity and the core when the movable mold and the fixed mold are combined; and
an ejection means installed on the movable mold to separate the molded product molded in the molding space from the cavity.

2. The cavity and core changing type foam-forming mold according to claim 1, wherein the movable mold comprises:
a movable plate having at least one cavity fastening hole formed thereon to make the cavity detachable;
a support plate provided to be spaced apart for a predetermined distance from the movable plate; and
a plurality of support bars supporting the movable plate and the support plate to be spaced apart from each other;
wherein a stepped portion is formed on one side surface of a border of the cavity fastening hole along the circumferential direction so that the cavity is coupled to one side surface of the movable mold that faces the fixed mold,
the fixed mold has a fixed plate having at least one core fastening hole formed thereon to make the core detachable, and
a stepped portion is formed on one side surface of a border of the core fastening hole along the circumferential direction so that the core is coupled to one side surface of the fixed mold that faces the movable mold.

3. The cavity and core changing type foam-forming mold according to claim 2, further comprising one or more fastening portions formed in a predetermined position on an opposite surface of the molding space of the cavity, and a support having one end that is coupled to the one or more fastening portions and the other end that is in contact with a predetermined position on an inner side surface of the support plate.

4. The cavity and core changing type foam-forming mold according to claim 2, further comprising one or more fastening portions formed in a predetermined position on an opposite surface of the molding space of the core, and a support having one end that is coupled to the one or more fastening portions and the other end that is in contact with a predetermined position on an inner wall on a fixing side of the molding machine.

5. The cavity and core changing type foam-forming mold according to claim 3 or 4, wherein a plurality of supports are provided, and the neighboring supports are connected by a support connection bar to be spaced apart from each other.

6. The cavity and core changing type foam-forming mold according to claim 3 or 4, wherein at least one support portion is formed to project from a predetermined position on one side surface of the support plate and the predetermined position on the inner wall on the fixing side of the molding machine to support the other end portion of the support.

7. The cavity and core changing type foam-forming mold according to claim 1, wherein the raw material injector comprises:
a body having a raw material inlet port and an air inlet port;
a connection pipe in which two large and small pipes are screw-engaged with a front end portion of the body to form an air transport space portion;
a nozzle coupled to a front end portion of the connection pipe, a piston rod penetratingly coupled to a rear end portion of the body to perform a reciprocating motion within the body; and
a piston coupled to a front end portion of the piston rod to open/close the nozzle according to a movement direction of the piston rod.

8. The cavity and core changing type foam-forming mold according to claim 7, wherein the ejection means comprises:
an ejector pin elastically and movably inserted into the inside of the piston rod;
a support member penetratingly coupled to a circumferential surface of the ejector pin and placed on an end portion of the piston rod;
a fixing member coupled to a locking groove that is formed on one end portion of the ejector pin; and
a coil spring inserted into the circumferential surface of the ejector pin and having one end portion and the other end portion elastically supported in the support member and the fixing member, respectively.
